# DEMANDE DE BREVET EUROPEEN

(11) **EP 2 134 026 A1**
(43) Date de publication de la demande: **16.12.2009**
(21) Numéro de dépôt: 08290541.5
(22) Date de dépôt: 11.06.2008
(51) Int. Cl.: H04L 5/14, H04L 25/49

(54) **Procédé de transmission de données à haut débit et dispositif(s) correspondant(s)**

(71) Demandeur: Gemplus, 13420 Gemenos (FR)
(72) Inventeur: Rhelimi, Alain, 92197 Meudon Cedex (FR)
(74) Mandataire: Cassagne, Philippe M.J.

(57) **Abrégé**

La présente invention concerne un procédé de transmission selon un mode à l'alternat d'un signal de données depuis un premier dispositif de transmission/réception vers un second dispositif transmission/réception, dit distant, comprenant une étape de codage logique selon laquelle au moins deux durées de transmission distinctes sont associées à deux états respectifs du signal de données à transmettre. Le procédé est **caractérisé en ce qu**'il comprend la génération par le premier dispositif d'un signal (10, 11) comprenant, pour la transmission d'un état du signal, sensiblement exclusivement un plateau à un premier niveau de tension pour la durée définie par la durée de transmission associée à l'état à transmettre et un front descendant, à l'exclusion de tout front montant, la transmission d'un état du signal de données depuis le second dispositif vers le premier dispositif comprenant la génération d'un signal (20, 21) par le second dispositif comprenant sensiblement exclusivement un plateau à un second niveau de tension et d'un front montant, à l'exclusion de tout front descendant.

## Description

La présente invention concerne un procédé de transmission de données à haut débit et des dispositifs de transmission/réception correspondants. Plus précisément, l'invention décrit une solution technique permettant une transmission numérique entre deux dispositifs de manière bidirectionnelle et simultanée (full duplex) en utilisant un seul fil actif. L'invention permet d'atteindre des vitesses de transmission élevée (plusieurs dizaines de Mbit/s) avec une distance entre lesdits dispositifs pouvant atteindre 1 m avec une immunité au bruit confortable.

La technologie décrite selon l'invention peut être utilisée en combinaison avec le Recommandation TS 102.613 de l'ETSI (European Telecommunication Standardization Institute) relative au SWP (Single Wire Protocol) et peut à titre de simple exemple être activée après qu'une carte SIM et un contrôleur NFC aient découvert leurs capacités d'opérer dans ce mode plus, performant proposé par l'invention. Bine que l'invention puisse ainsi être utilisée dans des cartes SIM SWP, elle peut par ailleurs être avantageusement utilisée dans tous environnements nécessitant la mise en oeuvre d'une transmission numérique entre deux dispositifs de manière bidirectionnelle et simultanée (full duplex) en utilisant un seul fil actif, par exemple dans les cas où le nombre de contacts disponibles pour les composants est limité.

De nombreuses techniques de modulation existent afin de partager un medium de transmission entre deux dispositifs de transmission/réception, les principales étant :

Le multiplexage temporel. Les deux dispositifs de transmission/réception transmettent à l'alternat et envoient leurs données respectives à des moments différents. La granularité des données transmises peut varier de la taille d'un bit à la taille d'une trame en passant par la taille d'un octet. Ethernet, l'USB, CAN, VAN, LIN ou les réseaux GSM utilisent de principe.

Le multiplexage fréquentiel. Chaque dispositif de transmission/réception occupe une bande de fréquence différente. La technologie des modems tel que ceux utilisés pour les réseaux ADSL utilise ce principe.

La séparation par domaine. Chaque dispositif de transmission/réception module des grandeurs physiques différentes. Le standard TS 102.613 (SWP) applique cette méthode où l'un des dispositifs de transmission/réception module un signal en tension alors que l'autre dispositif module un signal en courant.
- Le partage par sommation. Le medium transporte la somme des informations émises par les dispositifs de transmission/réception. Les dispositifs de transmission/réception déduisent l'information reçue en soustrayant leurs données transmises des données transmises sur le medium. Cette fonction est assurée par un duplexeur et est couramment utilisée dans le système de téléphonie classique.

L'ensemble de ces technologies peuvent utiliser un seul fil actif de communication (single ended) ou travailler sur une paire différentielle pour augmenter l'immunité au bruit pour les environnements difficiles (ex : atelier de fabrication, automobile,...).

La transmission à l'alternat de données sur un medium de communication en utilisant une granularité trop grande peut générer des latences importantes qui peuvent nuire aux performances. La bande passante effective est directement impactée par la latence de transmission. Afin d'annuler cet effet secondaire, l'utilisation d'une technologie full-duplex en combinaison avec un protocole adéquat comme ceux basés sur les fenêtres glissantes (sliding window) dont le représentant le plus connu est HDLC (ISO 13239), est souhaitée.

La problématique que nous résolvons dans la présente invention est la suivante :
- La solution doit présenter les caractéristiques d'une communication full-duplex avec une granularité d'échange au niveau du bit afin d'obtenir une latence minimale,
- La solution doit être symétrique et équilibrée, à savoir qu'aucun des dispositifs de transmission/réception n'a plus de privilège que l'autre (ni maître ni esclave),
- La solution doit permettre de fournir un mode de sauvegarde d'énergie en absence de transmission de données applicatives entre les deux dispositifs de transmission/réception,
- La solution doit fournir une procédure pour quitter dans un temps minimum le mode de sauvegarde d'énergie par un des dispositifs de transmission/réception ou les deux, et
- La solution doit permettre une distance opérationnelle d'au moins un mètre et un débit binaire pouvant atteindre 100 Mbit/s dans un milieu bruité.

Les technologies existantes présentées auparavant remplissent partiellement les critères exposés ci-dessus et la technologie la plus approchante est celle du SWP normalisée par l'ETSI hormis les performances liées à la vitesse de transmission et à la distance opérationnelle. La technologie SWP permet d'atteindre 1.6 Mbit/s sur une distance d'une vingtaine de centimètres.

L'invention vise à satisfaire à toutes ces contraintes techniques. A cette fin, un procédé de transmission selon un mode à l'alternat d'un signal de données depuis un premier dispositif de transmission/réception vers un second dispositif transmission/réception, dit distant, comprenant une étape de codage logique selon laquelle au moins deux durées de transmission distinctes sont associées à deux états respectifs du signal de données à transmettre, est caractérisé en ce qu'il comprend la génération par le premier dispositif d'un signal comprenant, pour la transmission d'un état du signal, sensiblement exclusivement un plateau à un premier niveau de tension pour la durée définie par la durée de transmission associée à l'état à transmettre et un front descendant, à l'exclusion de tout front montant, la transmission d'un état du signal de données depuis le second dispositif vers le premier dispositif comprenant la génération d'un signal par le second dispositif comprenant sensiblement exclusivement un plateau à un second niveau de tension et d'un front montant, à l'exclusion de tout front descendant. L'état du signal peut être un état binaire « 1 » ou « 0 » ou une suite de bits, par exemple « 101 ».

L'invention met à profit ce « nouveau type de multiplexage » afin d'obtenir un protocole full duplex avec une granularité au niveau du bit. Ceci confère à l'invention toutes les caractéristiques énoncées dans la problématique.

La méthode utilisée selon l'invention pour alterner la transmission de données entre les deux dispositifs de transmission/réception pourrait être traduit comme un « multiplexage de niveaux logiques ».

D'autres caractéristiques et avantages de la présente invention apparaîtront plus clairement à la lecture de la description qui suit en relation avec les dessins annexés correspondants dans lesquels :
- La Figure 1 illustre schématiquement deux dispositifs de transmission/réception selon l'invention;
- La Figure 2 illustre le multiplexage selon l'invention de niveaux entre les deux dispositifs de transmission/réception .
- La Figure 3 détaille les timings qui lient le pilotage des signaux par les deux dispositifs de transmission/réception ;
- la Figure 4 illustre un codage logique PWM basé sur la largeur des impulsions,
- La Figure 5 illustre deux signaux équivalents pour les dispositifs de transmission/réception alors qu'un l'un des signaux est entaché de bruit,
- La Figure 6 illustre les effets du bruit sur la transmission d'un signal de l'un des dispositifs de transmission/réception vers l'autre ;
- La Figure 7 illustre temporellement la commutation de ligne de l'état actif à suspendu et inversement,
- La Figure 8 montre un format de message du type propos par le standard ETSI TS 102.613,
- La Figure illustre un circuit inclus dans chaque dispositif de transmission/réception pour l'évaluation de la base de temps (clock/horloge) provenant du dispositif de transmission/réception distant;
- La Figure 10 illustre un circuit schématique d'une capacité programmable,
- La Figure 11 montre des représentations temporelles de signaux en fonction de deux programmations (T1 et T2) de la capacité programmable,
- La Figure 12 illustre le décodage des signaux reçus par un dispositif de transmission/réception grâce une bascule monostable programmé à 1.5T ; et
- La Figure 13 illustre la forme d'onde en bout de ligne de transmission du coté du dispositif de transmission/réception qui pilote le niveau bas.

### DESCRIPTION DETAILLEE DE L'INVENTION

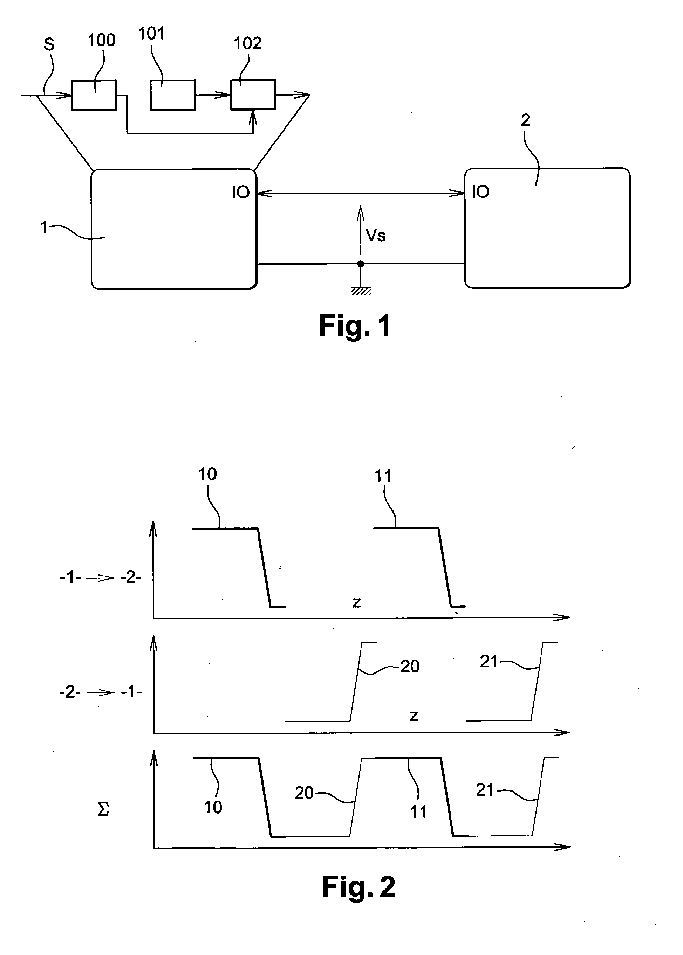

En référence à la Figure 1, entre deux dispositifs de transmission/réception 1 et 2 selon l'invention, il est proposé de transmettre à l'alternat des signaux de données. Le signal à transmettre est un train binaire de bits, ou états. La transmission utilise deux niveaux de tension correspondant à une tension haute de X volt (ex : 5 Volts) et une tension basse Y volt (ex : 0 Volt).

Selon l'invention, un codage logique est appliqué préalablement, lequel codage utilise par exemple la technique dite PWM (Pulse Wave Modulation) ou codage par impulsion modulée en largeur. Il résulte de cette étape préalable de codage par impulsion modulée en largeur qu'au moins deux durées de transmission distinctes (T, 2T) sont associées à deux états respectifs (« 0 », « 1 ») du signal données à transmettre,

Toujours selon l'invention, il est prévu que dans le système composé par les deux dispositifs de transmission/réception 1 et 2 et au codage binaire décrit ci-dessus, on affecte le niveau logique 1 à l'un des dispositifs de transmission/réception, par exemple 1, et le niveau logique 0 à l'autre dispositif de transmission/réception, ici 2.

Ainsi, selon l'invention et comme montré dans la Figure 2, le dispositif de transmission/réception 1 transmet son signal 10, 11 sous la forme d'un plateau de niveau « 1 », un front descendant du signal et éventuellement (en résultat du délai de « basculement ») une partie très réduite du niveau « 0 » et commute sa sortie en haute impédance en cas de non transmission. Le dispositif de transmission/réception 2 transmet son signal 20, 21 sous la forme d'un plateau de niveau « 0 », un front montant du signal et éventuellement une partie très réduite du niveau « 1 » puis commute sa sortie en haute impédance. Le signal représenté à la troisième ligne de la Figure 2 est la résultante Σ de la somme des deux signaux transmis par les deux dispositifs 1 et 2, montrés respectivement dans les premières et secondes lignes de cette figure.

Comme représenté dans la Figure 1, un dispositif de transmission/réception selon l'invention comprend schématiquement en cascade un circuit de codage logique 100 pour associer à au moins deux états respectifs d'un signal de données à transmettre au moins deux durées de transmission distinctes, un circuit 101 de détection du front descendant (respectivement montant) généré par un dispositif de transmission/réception distant, un circuit 102 dont l'entrée est connectée à la sortie du circuit 100, pour générer, en réponse à la détection du front descendant (respectivement montant) généré par un dispositif de transmission/réception distant, pour un état du signal de données à transmettre sensiblement exclusivement un plateau à un premier niveau (respectivement second niveau) de tension sensiblement pour la durée définie par la durée de transmission (T, 2T) associée à l'état (« 0 », « 1 ») à transmettre et un front montant (respectivement descendant)..

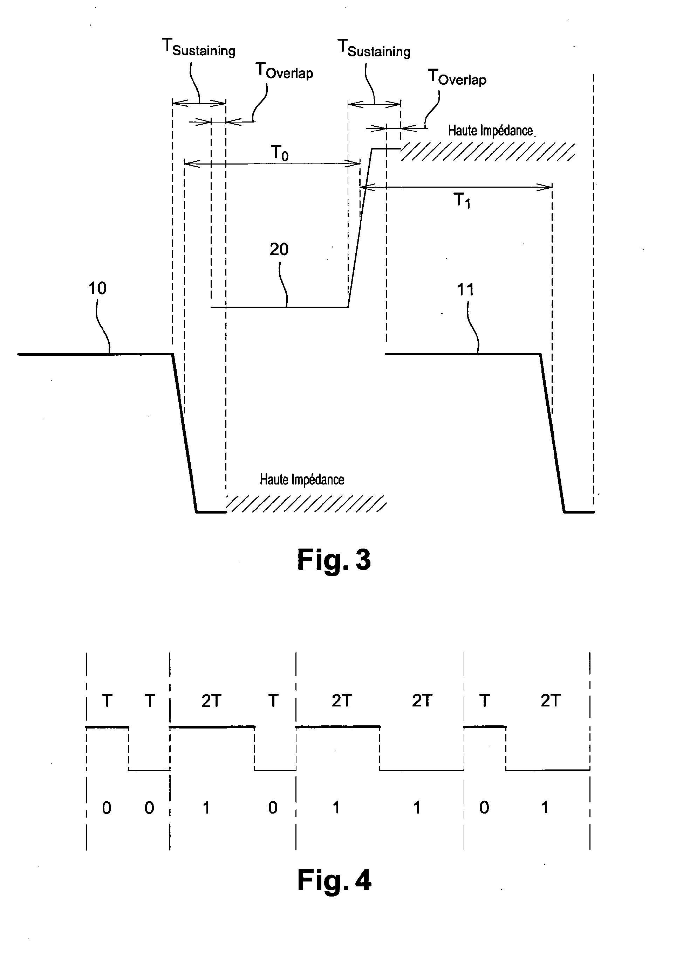

La Figure 3 montre dans le détail les états des signaux 10 et 11 produits par le dispositif 1, entre lesquels le dispositif bascule en état haute impédance, ainsi que le signal 20 produit par le dispositif 2. La ligne de transmission est constamment pilotée par au moins l'un des deux dispositifs 1 et 2 en basse impédance, ce qui confère une bonne immunité au bruit et une distance opérationnelle si tenté que l'impédance de sortie des transmetteurs soit égale à l'impédance de la ligne de transmission. L'amplitude des signaux transmis entre les dispositifs est définie par une convention propre au système. Cette convention est indispensable pour assurer une interopérabilité et exposer des marges d'immunité au bruit convenable pour un milieu donné.

Comme montré dans la Figure 4, le codage PWM est basé sur la largeur des impulsions : la valeur logique 0 a par convention une durée T et la valeur logique 1 a pour durée 2T. D'autres conventions peuvent être utilisés (ex : T et 3T) si ce choix conduit à des simplifications du système de récupération d'horloge de transmission nécessaire au décodage des informations reçues par chaque dispositif de transmission/réception.

Selon le mode d'implémentation, des codes supplémentaires peuvent être utilisés afin de transmettre un signal particulier à un dispositif de transmission/réception. Pour illustrer cet exemple, une convention mettant en valeur lesdits signaux pourrait être :
T : valeur logique 0
2T : valeur logique 1
4T : Réinitialisation de l'interface entre les deux dispositifs 1 et 2.

Dans ce mode de réalisation, la transmission de deux bits génère un signal périodique dont la durée est comprise entre 2T et 4T soit un débit binaire moyen dépendant de la distribution de valeur logique 0 et 1, compris entre 1/2T et 1/T.

Chaque dispositif de transmission/réception 1 et 2 transmet son signal après détection du front descendant, respectivement montant, du dispositif de transmission/réception opposé. Chaque dispositif de transmission/réception peut masquer le signal qu'il reçoit pendant un temps α.T, ou α est inférieur à 1 moins une marge d'erreur liée à la précision de la largeur des impulsions générées par l'émetteur.

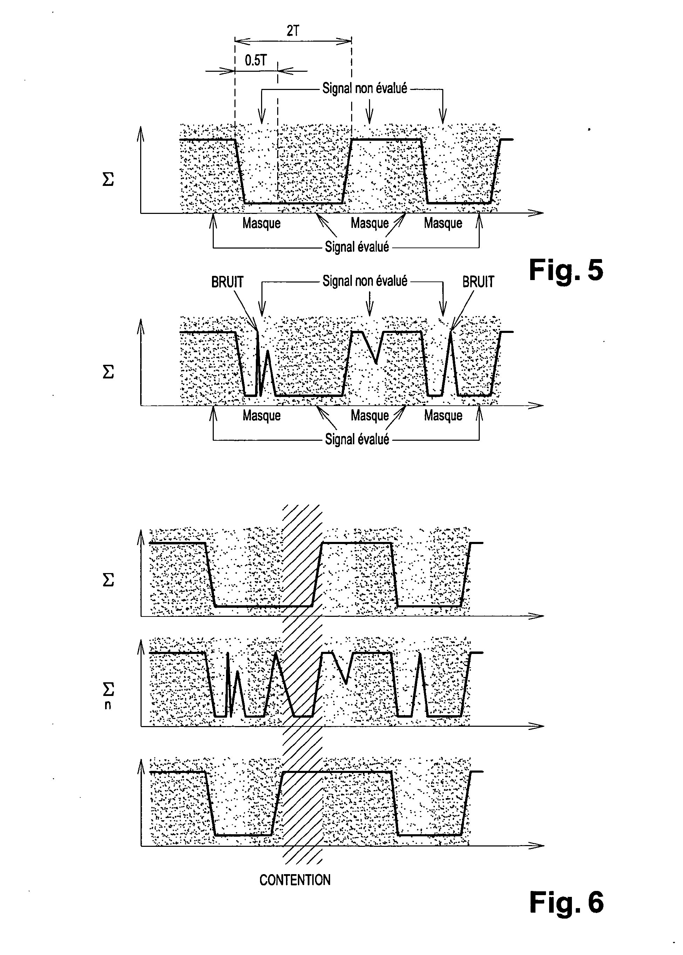

La Figure 5 illustre deux signaux perçus, en réception, de manière similaire par le dispositif de transmission/réception distant alors qu'un l'un des signaux est entaché de bruit (représentation du signal de la ligne du bas). Le masque appliqué sur le signal reçu par un dispositif de transmission/réception permet d'occulter un éventuel bruit pendant 0.5T (α = 0.5).

Comme montré dans la figure 6, un signal bruité est interprété par un dispositif de transmission/réception (dans sa fonction réception) qui prend le contrôle de la ligne. Les deux dispositifs de transmission/réception 1 et 2 pilotent la ligne simultanément et en opposition de phase. Les deux dispositifs de transmission/réception 1 et 2 sont en contention. L'état de la ligne est indéfini et peut durer jusqu'à (2-α)T. L'électronique des dispositifs de transmission/réception 1 et 2 doit pouvoir supporter une contention sans dommage. Une contention de ligne peut générer une erreur dans les deux sens de transmission.

Quand les deux dispositifs de transmission/réception 1 et 2 n'ont aucune donnée à transmettre, il est important de procéder à la suspension de l'activité électrique sur la ligne à des fins d'économie d'énergie. De même, si l'un des dispositifs de transmission/réception 1 ou 2 souhaite réactiver la ligne de transmission, une procédure de réactivation asynchrone doit être prévue. La solution propose une gestion de ligne à deux états :
- Ligne active: une transmission bidirectionnelle est possible, les deux dispositifs de transmission/réception 1 et 2 échangent des bits organisés en paquets.
- Ligne suspendue: aucune activité électrique, les deux dispositifs de transmission/réception 1 et 2 peuvent commuter dans un mode de sauvegarde d'énergie. Pour des raisons pratiques, la ligne est au niveau électrique 0 (0 Volt) quand elle est suspendue.

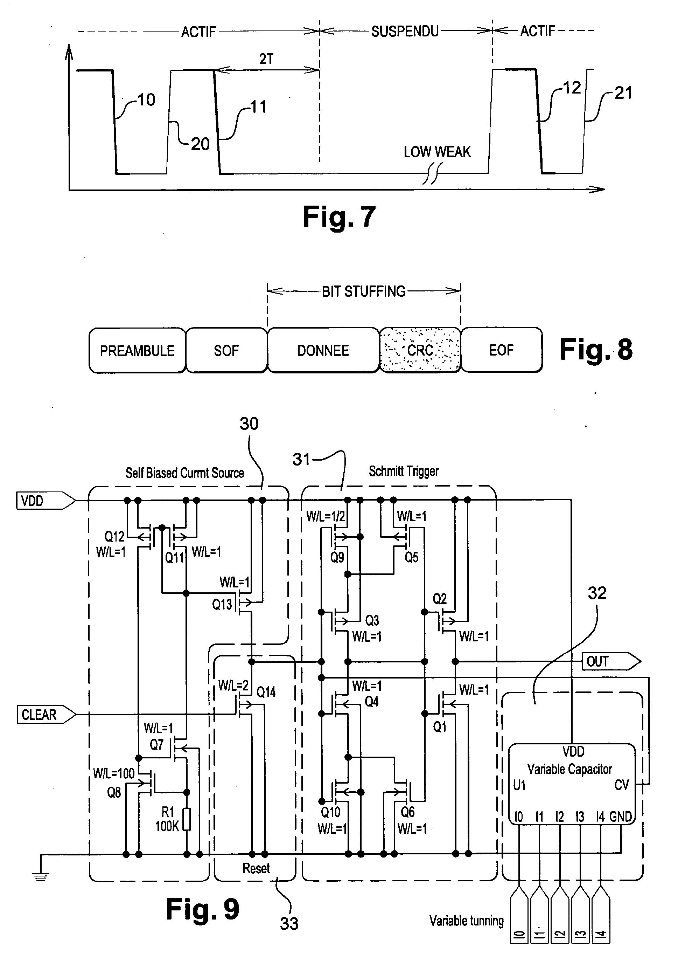

La Figure 7 illustre la procédure pour commuter la ligne de l'état actif à suspendu et inversement.

Les deux dispositifs de transmission/réception 1 et 2 conviennent d'un instant ou le dispositif de transmission/réception 2 pilotant le niveau « 0 » commute la ligne vers l'état suspendu. Pour cela le dispositif de transmission/réception 2 ne remonte pas la ligne au niveau 1. Afin de laisser l'opportunité au dispositif de transmission/réception 1 de commuter la ligne en mode actif, le dispositif de transmission/réception 2 maintient la ligne au niveau 0 faible (low weak). Le niveau « 0 » faible peut être réalisé par la connexion de la ligne au niveau 0 fort via une résistance (pulldown resistor) ou une source de courant ou encore un montage appelé « bus keeper ».

Chacun des dispositifs de transmission/réception 1 et 2 peut réactiver la ligne de la manière suivante :
- Le dispositif de transmission/réception 2 doit remonter la ligne au niveau « 1 » puis commuter en haute impédance.
- Le dispositif de transmission/réception 1 doit remonter la ligne au niveau « 1 » puis terminer son cycle selon la procédure décrite ci-dessus.

Les deux dispositifs de transmission/réception 1 et 2 ont nécessairement des bases de temps différentes, aussi une phase d'apprentissage est nécessaire afin que lesdits dispositifs de transmission/réception 1 et 2 puissent évaluer les bases de temps respectives afin de décodage des valeurs logiques reçues.

Comme montré dans la Figure 8, pour calibrer chaque dispositif de transmission/réception dans leur fonction de réception, un préambule PREAMBULE est transmis devant chaque trame (SOF, DONNEE, CRC, EOF) émise par l'autre dispositif de transmission/réception. Le motif du préambule PREAMBULE est constitué d'une série de valeur logique 1 et 0 qui facilite la calibration du dispositif de transmission/réception distant dans sa fonction de réception. De façon préférentielle, la transmission est orienté « bit » (« bit-oriented transmission »), aussi devons nous définir un drapeau de début de trame (SOF : Start Of Frame) et un drapeau de fin de trame (EOF : End Of Frame). Entre le SOF et l'EOF, les données transmises DONNEE sont codées par exemple selon la technique dite de « bit stuffing ». La recommendation ETSI TS 102.613 décrit précisément la structure d'une telle trame. Le motif du préambule ne doit pas générer une violation de bit stuffing.

En référence à la Figure 9, la bascule monostable illustrée dans cette Figure est déclenchée sur le front montant (master) ou le front descendant (slave) du signal transmis. Le principe de ce monostable est la charge a courant constant d'une capacité 32 programmable numériquement. Ladite charge commence quand le signal « CLEAR » est au niveau 0 ( transistor Q4 non passant). Un trigger de Schmitt 31 bascule à un niveau déterminé de la tension aux bornes de la capacité programmable. Plus la capacité programmée est importante et plus l'impulsion de sortie du monostable est retardée.

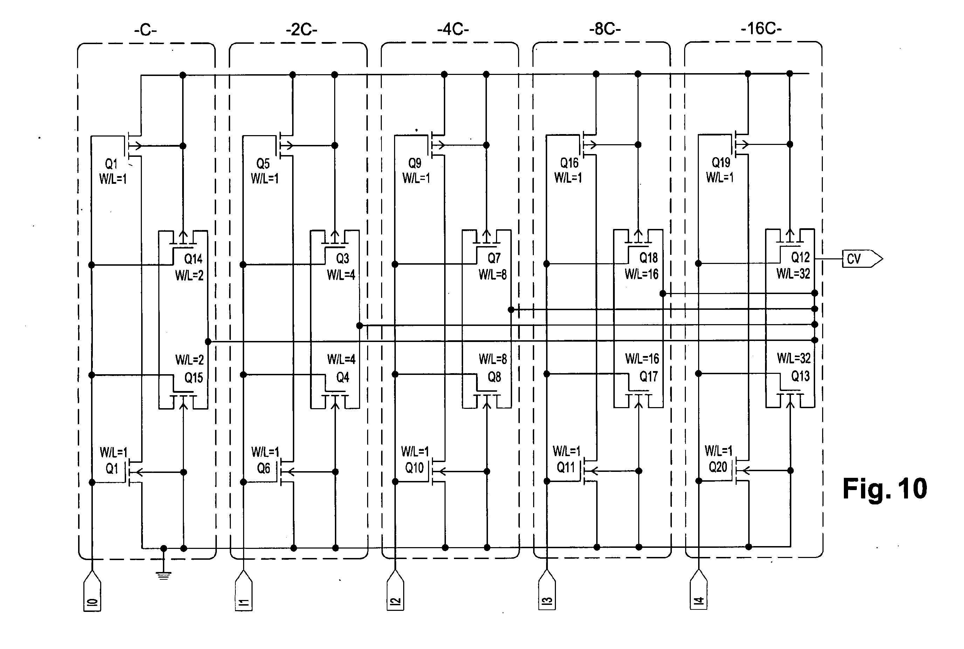

Le principe de la capacité programmable repose sur la variation de la capacité parasite d'une grille d'un transistor MOSFET en fonction de son état (passant ou bloqué). Ladite capacité est proportionnelle à la surface de la grille ainsi au produit W*L. La Figure 10 illustre à titre d'exemple une capacité programmable 32 à 5 étages permettant de programmer une capacité équivalente entre C et 32C.

La précision des délais générée par le monostable (Figure 9) n'a pas à être importante (< 20%) car l'erreur liée au décodage des bits du signal reçus n'est pas cumulative et chaque bit est auto-synchronisé. La synchronisation n'est possible que si la vitesse de communication des dispositifs 1 et 2 est dans une plage de tolérance suffisamment large pour intégrer une flexibilité du système et des tolérances des composants qui le compose.

Cette tolérance est définie par rapport à la vitesse de communication médiane à savoir 1/1.5T où T est le codage de la valeur logique 0 (voir Figure 4).

La vitesse de communication médiane ainsi que sa tolérance fait l'objet d'une convention (ex. un standard) liée au système.

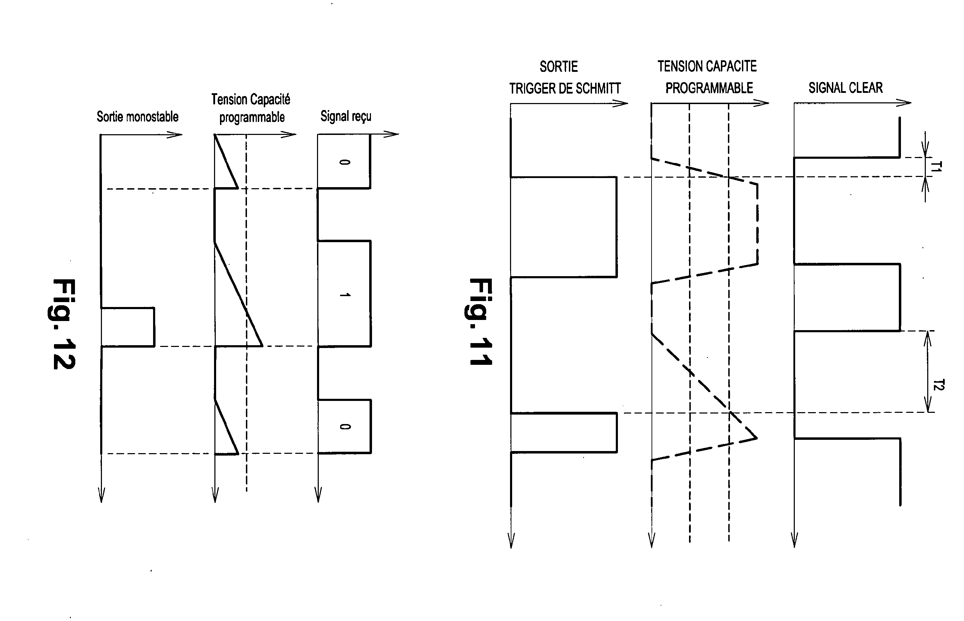

La Figure 12 illustre le signal de sortie du monostable de la Figure 9 en fonction de deux programmations (T1 et T2) de la capacité programmable.

Pendant la transmission du préambule PREAMBULE de synchronisation, le dispositif de transmission/réception 1 ou 2 recevant le signal doit évaluer la période T correspondant à la transmission d'un 0 logique. Il est donc judicieux d'envoyer des « 0 » logique durant ledit préambule de synchronisation.

Le principe de synchronisation repose sur une approximation successive dichotomique. La synchronisation se décompose en 2N étapes ou N est le nombre d'étage de la capacité programmable 32 (montrée selon une réalisation à la Figure 10), exprimé sur N bits entre 1 et 2^{N}-1, le dispositif de transmission/réception étant non synchronisé. Intrinsèquement, la programmation de la capacité programmable représente un délai D(Z) où Z est compris entre 1 et 2^{N}-1.

Le délai est programmée avec la valeur 2^{N-1}.

Pour les bits I de N à 0, les étapes suivantes sont mises en oeuvre :
- attendre la fin du bit reçu. Ranger dans le bit (I) de Z, la valeur de sortie du monostable, et
- attendre la fin du bit reçu. Ranger dans le bit (I) de Z, la valeur de sortie du monostable. Ranger 1 dans le bit (I-1), et ainsi de suite.

Tous les deux bits, on évalue un bit du délai à programmer.

Selon une alternative, la solution basée sur un monostable analogique peut être remplacé par son équivalent digital. La contrainte d'une solution numérique est une fréquence d'échantillonnage très élevée pouvant être incompatible avec des exigences de basse consommation d'énergie.

La synchronisation est déterministe. Le nombre de bits de synchronisation nécessaire est le double du nombre de bit pour programmer le délai généré par le monostable. Cependant, ce nombre de bits peut être réduit si le monostable délivre deux signaux correspondant au dépassement d'un niveau programmé X et X/2.

La valeur Z après synchronisation est lue et augmentée de 50% afin de permettre le décodage.

Les deux dispositifs de transmission/réception 1 et 2 émettent sur une ligne qui n'est pas nécessairement adapté (pas de terminaison Z=∞) aussi faisons nous face à une réflexion totale du signal émis.

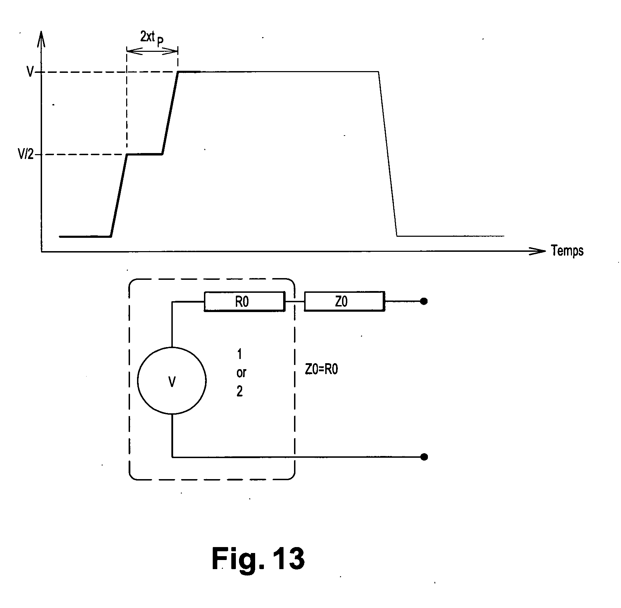

La Figure 13 illustre la forme d'onde en bout de ligne de transmission du coté du dispositif de transmission/réception qui pilote le niveau bas.

Sur des courtes distances de transmission, les réflexions ne sont pas gênantes, mais si le temps de propagation est comparable au temps de transmission d'un bit (bit rate) alors la ligne doit être adapté.

La solution est parfaitement compatible avec une transmission différentielle (ex : LVDS) et mettre à profit les bénéfices d'une meilleure immunité au bruit.

Dans un mode particulier de réalisation, plus de deux dispositifs d'émission/réception sont connectés à la même ligne de transmission.

Une solution simple exempte de contention de bus consiste d'une part à connecter un transmetteur de type A avec plusieurs transmetteurs de type B ou inversement à connecter un transmetteur de type B avec plusieurs transmetteurs de type A, d'autre part opérer un protocole de résolution sans collision (donc sans contention).

Un protocole de résolution sans collision peut être opéré selon les étapes suivantes:
1. Deux des dispositifs d'émission/réception écoutent la ligne et maintiennent leur sortie en haute impédance.
2. Un autre dispositif d'émission/réception, dit émettant, émet une trame contenant l'identifiant du transmetteur de type B autorisé à échanger une trame avec lui.
3. L'un des deux dispositifs d'émission/réception écoutant la ligne et ayant décodé son identifiant en écoutant le bus, échange une trame avec le transmetteur 1. Le dispositif d'émission/réception émettant échange une trame avec le dispositif ainsi assigné. Une gestion intelligente peut être avantageusement mise en place afin de distribuer l'accès au bus des dispositif d'émission/réception en fonction de leurs activités et donc de leurs besoins. Si les deux dispositifs d'émission/réception écoutant ne peuvent initier son échange dans un délai déterminé alors on revient à l'étape 1.
4. Retour à l'étape 1.

Ainsi, les avantages liées à la solution décrite ci-dessus apparaissent clairement :
- La solution est totalement symétrique et les deux dispositifs de transmission/réception ont simplement à choisir quel niveau ils doivent piloter,
- Elle fonctionne sur un fil actif mais peut également fonctionner sur une paire différentielle (LVDS, RS485). Cette caractéristique peut résoudre des exigences liées à nombre maximal de contacts (connecteur).
- Elle est immune au bruit en travaillant en basse impédance et en offrant un filtrage limitant l'impact du bruit, et permet d'atteindre des débits binaires élevés en occupant un spectre limité (dans l'exemple du brevet inférieur au deux fois la fréquence des données à transmettre).

## Revendications

1. Procédé de transmission selon un mode à l'alternat d'un signal de données depuis un premier dispositif de transmission/réception (1) vers un second dispositif transmission/réception (2), dit distant, comprenant une étape de codage logique selon laquelle au moins deux durées de transmission distinctes (T, 2T) sont associées à deux états respectifs (« 0 », « 1 ») du signal de données à transmettre, **caractérisé en ce qu'**il comprend la génération par le premier dispositif d'un signal (10, 11) comprenant, pour la transmission d'un état du signal, sensiblement exclusivement un plateau à un premier niveau de tension pour la durée définie par la durée de transmission (T, 2T) associée à l'état (« 0 », « 1 ») à transmettre et un front descendant, à l'exclusion de tout front montant, la transmission d'un état du signal de données depuis le second dispositif (2) vers le premier dispositif (1) comprenant la génération d'un signal (20, 21) par le second dispositif comprenant sensiblement exclusivement un plateau à un second niveau de tension et d'un front montant, à l'exclusion de tout front descendant.

2. Dispositif de transmission/réception, comprenant :
- un circuit (100) de codage logique pour associer à au moins deux états respectifs d'un signal de données à transmettre au moins deux durées de transmission distinctes (T, 2T),
- un circuit (101) de détection du front descendant généré par un dispositif de transmission/réception distant,
- un circuit (102) pour générer, en réponse à la détection du front descendant généré par un dispositif de transmission/réception distant, pour un état du signal de données à transmettre sensiblement exclusivement un plateau à un premier niveau de tension sensiblement pour la durée définie par la durée de transmission (T, 2T) associée à l'état (« 0 », « 1 ») à transmettre et un front montant, à l'exclusion de tout front descendant.

3. Dispositif de transmission/réception, comprenant :
- un circuit (100) de codage logique pour associer à au moins deux états respectifs d'un signal S de données à transmettre au moins deux durées de transmission distinctes (T, 2T),
- un circuit (101) de détection d'un front montant généré par un dispositif de transmission/réception distant,
- un circuit (102) pour générer, en réponse à la détection dudit front montant généré par un dispositif de transmission/réception distant, pour un état du signal de données à transmettre, sensiblement exclusivement un plateau à un second niveau de tension sensiblement pour la durée définie par la durée de transmission (T, 2T) associée à l'état (« 0 », « 1 ») à transmettre et un front descendant, à l'exclusion de tout front montant.
